Europäisches Patentamt

**European Patent Office**

**Office européen des brevets**

(19)

(11) Numéro de publication: **0 148 716**

**B1**

(12) # FASCICULE DE BREVET EUROPEEN

(45) Date de publication du fascicule du brevet: **08.08.90**

(51) Int. Cl.⁵: **B 60 S 1/48**

(21) Numéro de dépôt: **84440073.9**

(22) Date de dépôt: **27.12.84**

(54) **Lave-glace à deux réservoirs de liquide.**

(30) Priorité: **11.01.84 FR 8400703**

(43) Date de publication de la demande:
**17.07.85 Bulletin 85/29**

(45) Mention de la délivrance du brevet:
**08.08.90 Bulletin 90/32**

(84) Etats contractants désignés:
**AT BE CH DE GB IT LI LU NL SE**

(56) Documents cités:
**BE-A- 750 858**
**GB-A-1 451 666**
**US-A-3 594 846**

(73) Titulaire: **Hueber, François**
**45, rue du Dr. Hurst**
**F-68300 Saint Louis (FR)**

(72) Inventeur: **Hueber, François**
**45, rue du Dr. Hurst**
**F-68300 Saint Louis (FR)**

(74) Mandataire: **Nuss, Pierre**
**10, rue Jacques Kablé**
**F-67000 Strasbourg (FR)**

Courier Press, Leamington Spa, England.

## Description

La présente invention concerne le domaine des accessoires de véhicules automobiles, en particulier des lave-glaces, et a pour objet un lave-glace à deux réservoirs de liquide, selon le préambule de la revendication 1.

Actuellement, les lave-glaces pour véhicules automobiles sont généralement constitués par un ou plusieurs gicleurs reliés par l'intermédiaire d'une pompe à un réservoir de liquide de lavage. Ces lave-glaces connus permettent, par remplissage de leur réservoir avec un liquide adapté, un lavage correct des pare-brises, ou autre. Cependant, en été pour débarrasser un pare-brise des moucherons écrasés, ou en hiver pour dégivrer ledit pare-brise, une faible quantité de liquide approprié serait suffisante, et la majeure partie dudit liquide utilisé sert uniquement au rinçage. Ainsi, pour obtenir un pare-brise propre, l'utilisateur est conduit à une dépense relativement importante de liquide de lavage, souvent dissuasive.

On connaît également, par US—A—3,594,846 qui correspond au preambule de la revendication 1, un dispositif très complexe de lavage de pare-brises faisant intervenir un nombre important de valves et un circuit électrique de commande compliqué. Dans ce dispositif une commande au moyen d'un interrupteur enclenche un proces sus de commande en cascade, d'abord de la pompe d'un premier réservoir et simultanément d'un temporisateur déclenchant la commande de la pompe du second réservoir. Le fonctionnement de cette seconde pompe déclenche un deuxième temporisateur qui provoque l'arrêt de ladite seconde de pompe au bout d'une durée prédéterminée. Ainsi, il n'est pas possible à l'utilisateur d'interrompre le processus de lavage et de rinçage en cours de route par simple relâchement de l'interrupteur de commande. En outre, le branchement électrique du dispositif selon US—A—3,594,846 est très complexe et nécessite une adaptation spécifique au circuit électrique du véhicule.

De plus, l'actionnement de la manette de commande réalise la délivrance d'un produit détergeant et le relâchement de la manette, influence aucunement le rinçage, qui s'effectue automatiquement avec action simultanée des essuie-glaces. Ce dispositif, ne peut donc pas fonctionner en hiver avec un produit anti-givre, car la projection de ce produit est toujours suivie d'une opération de rinçage qui est néfaste au bon fonctionnement ultérieur du dispositif.

Enfin, le moteur d'essuie-glaces est commandé par actionnement différentiel, après une durée déterminée de projection du produit, au moyen d'un contacteur hydraulique, de sorte qu'une interruption instantanée en cas de modification brutale des conditions de conduite n'est pas possible.

La présente invention a pour but de pallier ces inconvénients.

Elle a, en effet, pour objet un lave-glace constitué par deux réservoirs à liquide séparés, munis chacun d'une pompe électrique et reliés aux gicleurs de lave-glace par l'intermédiaire d'un raccordement en T avec interposition, entre le raccordement en T et chaque pompe d'un anti-retour et par un organe de commande différentielle des pompes électriques, les réservoirs à liquide renfermant chacun un liquide distinct, à savoir un liquide de lavage et un liquide de rinçage, par exemple un liquide anti-moustique et de l'eau en été, ou un liquide anti-givre et un liquide anti-gel de rinçage en hiver, caractérisé en ce que l'organe de commande différentielle des pompes électriques est avantageusement sous forme d'un temporisateur électromécanique ou électronique, mis en circuit directement ou au moyen d'un relais actionné par une manette de commande usuelle, et présentant deux contacts à mises sous tension et hors tension différées des pompes électriques, et dont la durée de mise sous tension du premier contact est réglable, le second contact étant coupé lors du relâchement de la manette de commande.

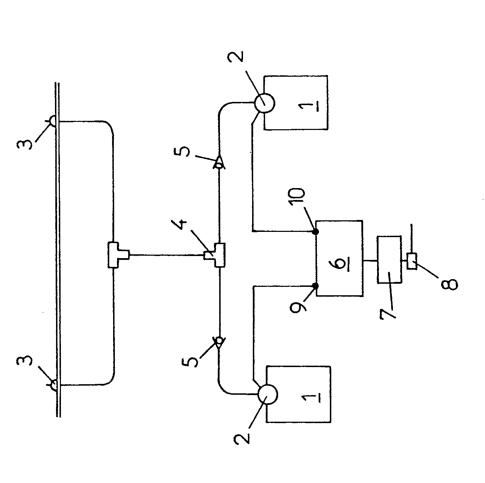

L'invention sera mieux comprise, grâce à la description ci-après, qui se rapporte à un mode de réalisation préféré, donné à titre d'exemple non limitatif, et expliqué avec référence au dessin schématique annexé, dont la figure unique est un schéma de principe d'un gicleur conforme à l'invention.

Comme le montre le dessin annexé, le lave-glace conforme à l'invention est essentiellement constitué par deux réservoirs à liquide 1 séparés, qui sont munis chacun d'une pompe electrique 2 et relies aux gicleurs 3 de lave-glace par l'intermédiaire d'un raccordement en T 4 avec interposition, entre le raccordement en T 4 et chaque pompe 2 d'un anti-retour 5 et par un organe 6 de commande différentielle des pompes électriques 2, les réservoirs à liquide 1 renfermant chacun un liquide distinct, à savoir un liquide de lavage et un liquide de rinçage, par exemple un liquide anti-moustique et de l'eau en été, ou un liquide anti-givre et un liquide anti-gel de rinçage en hiver, caractérisé en ce que l'organe 6 de commande différentielle des pompes électriques 2 est avantageusement sous forme d'un temporisateur électromécanique ou électronique, mis en circuit directement ou au moyen d'un relais 7 actionné par une manette de commande usuelle 8, et présentant deux contacts 9 et 10 à mises sous tension et hors tension différées des pompes électriques 2, et dont la durée de mise sous tension du premier contact est réglable, le second contact étant coupé lors du relâchement de la manette de commande 8.

Ainsi, le contact 9 peut, par exemple, être mis sous tension en premier et permettre le fonctionnement de la pompe 2 reliée au récipient 1 renfermant le liquide de lavage, sa coupure correspondant à la mise sous tension du contact 10 de commande de pompe 2 reliée au récipient 1 renfermant le liquide de rinçage.

Le temporisateur 6 est un temporisateur électromécanique ou électronique, dont la durée de mise sous tension du premier contact est règlable, le second contact étant coupé lors du relâchement de la manette de commande 8.

Selon une autre variante de réalisation de l'invention, non représentée au dessin annexé. l'organe 6 de commande différentielle des pompes électriques 2 peut être constitué sous forme d'un interrupteur manuel à deux positions à retour automatique en position de repos.

Conformément à une autre variante de réalisation de l'invention, non représentée au dessin annexé, les antiretours 5 et le raccordement en té peuvent être remplacés par une vanne à trois voies-deux positions dont la sortie est reliée aux gicleurs 3, et dont les entrées sont raccordées aux pompes 2 des réservoirs 1. Dans le cas d'utilisation d'une telle vanne, la mise en marche de la première pompe a pour effet de fermer l'orifice d'entrée de vanne correspondant à la deuxième pompe, et inversement.

Le lave-glace conforme à l'invention fonctionne de la manière suivante:

Par actionnement de la manette 8, le relais 7 met le temporisateur 6 sous tension et le premier contact 9 est fermé pendant un temps prédéterminé, par exemple d'une durée de trois secondes. La première pompe 2, reliée au réservoir 1 de liquide de lavage est alors mise en marche et débite ledit liquide pour l'éjecter à travers les gicleurs 3. Le liquide sous pression, qui est transporté à travers le raccordement en té 4, ferme la conduite d'amenée affectée à l'autre réservoir 1 en poussant sur la bille de l'anti-retour 5 correspondant. Après écoulement de la durée prédéterminée, le temporisateur 6 coupe le contact 9 et met le contact 10 sous tension et ainsi la deuxième pompe 2, qui débite alors le liquide de rinçage qui ferme l'antiretour 5 affecte au premier reservoir 1. Cette deuxième pompe débite du liquide de rinçage tant que la manette 8 est actionnée. Dès que cette dernière est relâchée, le relais 7 coupe le temporisateur 6, qui revient automatiquement en position de départ.

Grâce à l'invention, il est possible de réaliser un lave-glace permettant successivement un lavage et un rinçage du pare-brise avec une dépense minimum de liquide de lavage concentré. De plus, l'utilisation d'un liquide de rinçage permet de débarrasser le pare-brise de toutes traces de concentré subsistant nécessairement avec les produits et lave-glaces connus. En outre, en hiver, il est possible de remplir les différentes conduites du laveglace de produit anti-givre, évitant ainsi toute obstruction de ces dernières.

Bien entendu, l'invention n'est pas limitée au mode de réalisation décrit et représenté au dessin annexé. Des modifications restent possibles, notamment du point de vue de la constitution des divers éléments, ou par substitution d'équivalents techniques, sans sortir pour autant du domaine de protection de l'invention.

## Revendications

1. Lave-glace constitué par deux réservoirs à liquide (1) séparés, munis chacun d'une pompe électrique (2) et reliés aux gicleurs (3) de lave-glace par l'intermédiaire d'un raccordement en T (4) avec interposition, entre le raccordement en T (4) et chaque pompe (2) d'un anti-retour (5) et par un organe (6) de commande différentielle des pompes électriques (2), les réservoirs à liquide (1) renfermant chacun un liquide distinct, à savoir un liquide de lavage et un liquide de rinçage, par exemple un liquide anti-moustique et de l'eau en été, ou un liquide anti-givre et un liquide anti-gel de rinçage en hiver, caractérisé en ce que l'organe (6) de commande différentielle des pompes électriques (2) est avantageusement sous forme d'un temporisateur électromécanique ou électronique, mis en circuit directement ou au moyen d'un relais (7) actionné par une manette de commande usuelle (8), et présentant deux contacts (9) et (10) à mises sous tension et hors tension différées des pompes électriques (2), et dont la durée de mise sous tension du premier contact est réglable, le second contact étant coupé lors du relâchement de la manette de commande (8).

2. Lave-glace, suivant la revendication 1, caractérisé en ce que l'organe (6) de commande différentielle des pompes électriques (2) peut être constitué sous forme d'un interrupteur manuel à deux positions à retour automatique en position de repos.

3. Lave-glace, suivant la revendication 1, caractérisé en ce que les anti-retours (5) et le raccordement en té peuvent être remplacés par une vanne à trois voies—deux positions dont la sortie est reliée aux gicleurs (3), et dont les entrées sont raccordées aux pompes (2) des réservoirs (1).

## Patentansprüche

1. Scheibenwischer, bestehend aus zwei getrennten Flüssigkeitsbehältern (1), wovon jeder mit einer Elektropumpe (2) ausgestattet und mit zwei Spritzdüsen (3) zum Scheibenwischen über eine T-Abzweigung (4) mit Zwischenschaltung einer Rücklaufsicherung (5) zwischen der T-Abzweigung (4) und jeder Pumpe (2), und aus einem Organ (6) zur Differentialsteuerung für die Elektropumpen (2) verbunden ist, wobei die Flüssigkeitsbehälter (1) jeweils eine bestimmte Flüssigkeit, d.h. eine Wasch- und Spülflüssigkeit, zum Beispiel eine Anti-Fliegen-Flüssigkeit und Wasser im Sommer oder eine Anti-Reif- und Anti-Frost-Spülflüssigkeit im Winter enthalten, dadurch gekennzeichnet, daß das Organ (6) zur Differentialsteuerung für die Elektropumpen (2) vorteilhaft als elektromechanischer oder elektronischer Verzögerer ausgeführt ist, der direkt oder mittels eines über einen gebräuchlichen Bedienungshebel (8) betätigten Relais (7) geschaltet wird, und zwei Kontakte (9) und (10) zum versetzten Unterspannungsetzen und Unterbrechen der Spannung der Elektropumpen (2) aufweisen, und wovon die Spannungsdauer des ersten Kontkakts einstellbar ist, während der zweite Kontakt bei Loslassen des Bedienungshebels (8) unterbrochen wird.

2. Scheibenwischer nach Anspruch 1, dadurch gekennzeichnet, daß das Organ (6) für die Differentialsteuerung der Elektropumpen (2) aus einem manuellen Zweistellungsunterbrecher mit automatischem Ausschalter in Ruhestellung bestehen kann.

3. Scheibenwischer nach Anspruch 1, dadurch gekennzeichnet, daß die Rücklaufsicherungen (5) und die T-Abzweigung durch ein Drei-Wege-Zweistellungventil ersetzt werden kann, dessen Ausgang mit den Spritzdüsen (3) und dessen Eingänge mit den Pumpen (2) der Behälter (1) verbunden sind.

**Claims**

1. Windscreen-washer consisting of two separate liquid reservoirs (1) which are each equipped with an electric pump (2) and are connected to the windscreen-washer nozzles (3) by means of a tee piece (4) with interposition, between the tee piece (4) and each pump (2), of a nonreturn means (5) and by a member (6) for the differential control of the electric pumps (2), the liquid reservoirs (1) each containing a different liquid, that is a washing liquid and a rinsing liquid, for example an anti-mosquito liquid and water in summer or a de-icer liquid and an antifreeze rinsing liquid in winter, characterised in that the member (6) for differential control of the electric pumps (2) is advantageously in the form of an electromechanical or electronic timer connected directly or by means of a relay (7) actuated by a conventional control lever (8) and having two contacts (9) and (10) for the deferred switching on and off of the electric pumps (2) and of which the switch on period of the first contact is adjustable, the second contact being cut off when the control lever (8) is released.

2. Windscreen-washer according to claim 1, characterised in that the member (6) for the differential control of the electric pumps (2) can be made up in the form of a manual switch which has two positions and automatically returns to the rest position.

3. Windscreen-washer according to claim 1, characterised in that the nonreturn means (5) and the tee piece can be replaced by a three-way, two-position valve of which the outlet is connected to the nozzles (3) and of which the inlets are coupled to the pumps (2) of the reservoirs (1).